# EUROPÄISCHE PATENTSCHRIFT

(11) **EP 4 375 050 B1**
(45) Veröffentlichungstag und Bekanntmachung des Hinweises auf die Patenterteilung: **09.12.2026**
(21) Anmeldenummer: 23207907.9
(22) Anmeldetag: 06.11.2023
(51) Int. Cl.: B29C 64/209, B29C 48/02, B29C 64/295, B33Y 30/00

(54) **DRUCKKOPF FÜR EINEN 3D-DRUCKER**
PRINT HEAD FOR 3D PRINTER
TÊTE D'IMPRESSION POUR UNE IMPRIMANTE 3D

(30) Priorität: 25.11.2022 DE 102022131214
(43) Veröffentlichungstag der Anmeldung: 29.05.2024
(73) Patentinhaber: Eichenauer Heizelemente GmbH & Co. KG, 76870 Kandel (DE)
(72) Erfinder: Leininger, Philippe, 67500 Hagenau (FR); Schlachter, Ulrich, 76863 Herxheim (DE)
(74) Vertreter: Twelmeier Mommer & Partner

(56) Entgegenhaltungen:
- EP-A1- 3 965 528
- WO-A1-2016/158137
- WO-A1-2022/130269

## Beschreibung

Die Erfindung betrifft einen Druckkopf für einen 3D-Drucker. Ein Druckkopf mit den im Oberbegriff des Anspruchs 1 angegebenen Merkmalen ist aus EP 3 965 528 A1 bekannt.

3D-Drucker ermöglichen eine schnelle und einfache Herstellung von Prototypen oder Vorserienvisualisierungsmodellen. Derzeit sind verschiedene 3D-Druckverfahren gebräuchlich. Die vorliegende Erfindung betrifft einen Druckkopf für einen 3D-Drucker, mit dem aufgeschmolzener Kunststoff schichtweise aufgetragen und so ein dreidimensionaler Gegenstand erzeugt wird. Dabei kann der Kunststoff auch Zusätze wie Metall, Keramik, Graphit oder Karbonfasern enthalten.

Druckköpfe mit einem Rohr, das eine Heizwiderstandsschicht trägt, ermöglichen es Kunststoffmaterial sehr rasch aufzuschmelzen, so dass schnell mit dem Drucken begonnen werden kann, da ein Rohr mit einer Heizwiderstandsschicht eine vorteilhaft geringe Wärmekapazität hat. Eine vorteilhafte geringe Wärmekapazität führt auch dazu, dass das Rohr am Ende eines Druckvorgangs oder bei Unterbrechung eines Druckvorgangs rasch abkühlt, was zu einem geringerem Nachtropfen von flüssigem Material aus der Düse führt. Geringeres Nachtropfen ermöglicht eine höhere Präzision beim Drucken.

Ständiges Ziel bei der Entwicklung von Druckköpfen für 3D-Drucker ist, dreidimensionale Gegenstände möglichst schnell drucken zu können, weshalb allgemein eine möglichst schnelle Aufheizung angestrebt wird.

Aufgabe der vorliegenden Erfindung ist es, einen Weg aufzuzeigen, wie das Rohr eines Druckkopfs für einen 3D-Drucker noch schneller aufgeheizt werden kann.

Diese Aufgabe wird durch einen Druckkopf mit den im Anspruch 1 angegebenen Merkmalen gelöst. Vorteilhafte Weiterbildungen der Erfindung sind Gegenstand von Unteransprüchen.

Indem das Rohr des Druckkopfs in einer ringförmigen Halterung sitzt, und an der Halterung Federkontakte montiert sind, die an sich gegenüberliegenden Stellen an dem Rohr anliegen und die Heizwiderstandsschicht kontaktieren, kann Heizstrom praktisch über den gesamten Umfang des Rohrs fließen. Die beiden sich gegenüberliegenden Federkontakte sind nämlich durch eine Parallelschaltung der Heizwiderstandsschicht verbunden, da Heizstrom von einem Federkontakt zu dem gegenüberliegenden Federkontakt über je zwei verschiedene Umfangshälften fließen kann. Das Rohr eines erfindungsgemäßen Druckkopfes kann somit auf einem größeren Teil seines Umfangs, bevorzugt auf seinem gesamten Umfang erwärmt werden, was ein schnelleres Aufheizen ermöglicht als eine Heizschicht, die nur einen Teil des Umfangs bedeckt, etwa in Form von Leiterbahnen.

Die Heizwiderstandsschicht kann das Rohr auf seinem vollen Umfang umgeben. Aus fertigungstechnischen Gründen kann es vorteilhaft sein, dass ein Längsspalt in der Heizschicht verbleibt. Dieser Längsspalt kann durch einen Leiterbahnstreifen überbrückt werden, damit dennoch der gesamte Umfang ausgenutzt werden kann.

Die Heizwiderstandsschicht kann direkt auf das Rohr aufgetragen werden oder auf eine Zwischenschicht. Die Heizwiderstandsschicht kann beispielsweise aufgedruckt, aufgesprüht oder aus der Gasphase abgeschieden sein. Heizschichten, die zunächst flüssig oder als Paste aufgebracht und dann durch Temperatureinwirkung verfestigt werden, werden oft als Dickschichtwiderstände bezeichnet. Derartige Heizwiderstandsschichten können beispielsweise auf Basis von Rutheniumdioxid, Ag, Graphit, Carbon-Nanotubes, oder anderer leitfähiger Materialien hergestellt sein. Heizwiderstandsschichten können auch aus der Gasphase abgeschieden werden, beispielsweise mittels Kathodenzerstäubung. Derartige Heizwiderstandsschichten werden oft als Dünnschichtwiderstände bezeichnet und können beispielsweise auf Basis von Nickel und/oder Chrom hergestellt sein.

Bevorzugt wird die Heizwiderstandsschicht nahezu vollflächig auf das Rohr aufgebracht, wobei lediglich ein fertigungstechnisch bedingter Spalt verbleiben kann. Eine anschließend (oder vorher) aufgebrachte Leiterbahn überdeckt dann vorteilhaft den Spalt, sodass keine Lücke umfangsseitig mehr verbleibt.

Abschließend wird bevorzugt eine Deckschicht zum Schutz und zur Isolation des Heizelementes aufgebracht, die lediglich Aussparungen im Bereich der Kontaktierungen freilässt. Die Deckschicht kann beispielsweise eine amorphe Schicht sein oder eine glasartige Schicht, d.h. eine Schicht, die neben amorphen Bestandteilen auch kristalline Bestandteile enthält.

Eine vorteilhafte Weiterbildung der Erfindung sieht vor, dass das Rohr und die Düse einstückig hergestellt sind. Zwar können Rohr und Düse auch separat gefertigt und bei der Montage verbunden werden, mit einer einstückigen Herstellung lassen sich aber Fertigungs- und Montagekosten verringern und eine bessere Wärmeverteilung erreichen.

Eine weitere vorteilhafte Weiterbildung der Erfindung sieht vor, dass die Düse und das Rohr aus Keramik, beispielsweise einer Aluminiumoxid-Keramik hergestellt sind. Düse und Rohr können beispielsweise aus Pulver durch Sinterung, insbesondere in Kombination mit einem Spritzgussverfahren oder 3D-Druckverfahren einstückig hergestellt werden. Alternativ können Rohr und Düse aber auch aus Metall, insbesondere Stahl, hergestellt werden. Bei einem Metallrohr kann die Heizschicht auf eine elektrisch isolierende Zwischenschicht aufgebracht sein. Eine Zwischenschicht kann auch zur Verbesserung der Haftung der Heizschicht auf einem Keramikrohr vorgesehen sein.

Eine weitere vorteilhafte Weiterbildung der Erfindung sieht vor, dass die ringförmige Halterung stoffschlüssig mit dem Rohr verbunden ist. Das Rohr kann beispielsweise in die ringförmige Halterung gesteckt und dann mit ihr hartverlötet oder verklebt werden, beispielsweise mit einem Klebstoff auf Basis von Aluminiumoxid, Kaliumsilikat und Wasser.

Eine weitere vorteilhafte Weiterbildung der Erfindung sieht vor, dass die Halterung aus Steatit oder einer Aluminiumoxid-Keramik hergestellt ist. Steatit hat dabei den besonderen Vorteil einer relativ geringen Wärmekapazität und einer vergleichsweise geringen Wärmeleitfähigkeit. Steatit hat zudem den Vorteil, dass damit eine kostengünstige Herstellung durch Pressverfahren möglich ist.

Bevorzugt hat die Halterung an ihrer der Düse zugewandten Unterseite eine Aufnahme für Klebstoff oder Hartlot. Auf diese Weise kann der Klebstoff bzw. das Hartlot gut dosiert und verteilt werden. Die Aufnahme für Klebstoff oder Hartlot kann als radiale und/oder axiale Vertiefung, beispielsweise als Aussparung, Rampe, Rille oder Ringschulter ausgebildet sein.

Die Halterung ist bevorzugt axial im Bereich der Heizschicht mit dem Rohr verbunden. Überraschend hat sich gezeigt, dass dies möglich ist, ohne dass es zu Beeinträchtigungen des Heizelementes kommt. Bevorzugt wird dabei die Halterung stoffschlüssig mit der Deckschicht verbunden.

Eine weitere vorteilhafte Weiterbildung der Erfindung sieht vor, dass das Rohr an seinem von der Düse abgewandten Ende ein Hitzeschutzrohr trägt. Das Hitzeschutzrohr verlängert das Rohr und entkoppelt es thermisch von übrigen Teilen eines 3D-Druckers. Das Hitzeschutzrohr kann mit dem Rohr stoffschlüssig verbunden sein, beispielsweise verklebt. Das Hitzeschutzrohr kann beispielsweise aus einem Metall sein, das eine geringe Wärmeleitfähigkeit und eine gute mechanische Festigkeit hat, beispielsweise Titan. Bevorzugt ist das Hitzeschutzrohr aber aus Keramik, beispielsweise einer Zirkonoxid-Keramik. Zirkonoxid-Keramiken haben eine vorteilhaft geringe Wärmeleitfähigkeit und eine hohe Abriebfestigkeit.

Um eine gute Verbindungsfestigkeit zu erreichen, kann das Rohr in den Hitzeschutz eingesteckt werden oder der Hitzeschutz in das Rohr. Vorteilhaft liegt dadurch eine größere Verbindungsfläche vor als bei lediglich stumpf anliegenden Bauteilen. Bevorzugt erfolgt die Verbindung durch Kleben oder Löten. Äußerst bevorzugt ist dabei ein Klebe- oder Lötspalt zwischen Hitzeschutz und Rohr zur Aufnahme des Verbindungsmateriales, d.h. Lot oder Klebstoff, vorgesehen. Rohr und Hitzeschutz können beispielsweise konische Endabschnitte haben, mit denen sie ineinandergesteckt sind.

Zur Temperaturüberwachung kann an dem Rohr, insbesondere im Bereich der Heizwiderstandsschicht, ein Temperatursensor anliegen, beispielsweise ein Messwiderstand wie ein PT100. In einer bevorzugten Ausgestaltung wird der Sensor ebenfalls durch die ringförmige Halterung gehalten. Äußerst bevorzugt ist dabei ebenfalls ein Federblech an der Halterung befestigt, das den Sensor federnd gegen das Rohr drückt. In einer vorteilhaften Ausgestaltung weist die Halterung dazu einen Ansatz auf, den Laschen des Federbleches elastisch umgreifen. Zusätzlich kann der Sensor noch mit dem Rohr verklebt sein.

Weitere Einzelheiten und Vorteile der Erfindung werden an einem Ausführungsbeispiel unter Bezugnahme auf die beigefügten Zeichnungen erläutert. Gleiche und einander entsprechende Komponenten sind dabei mit übereinstimmenden Bezugszeichen versehen. Es zeigen:

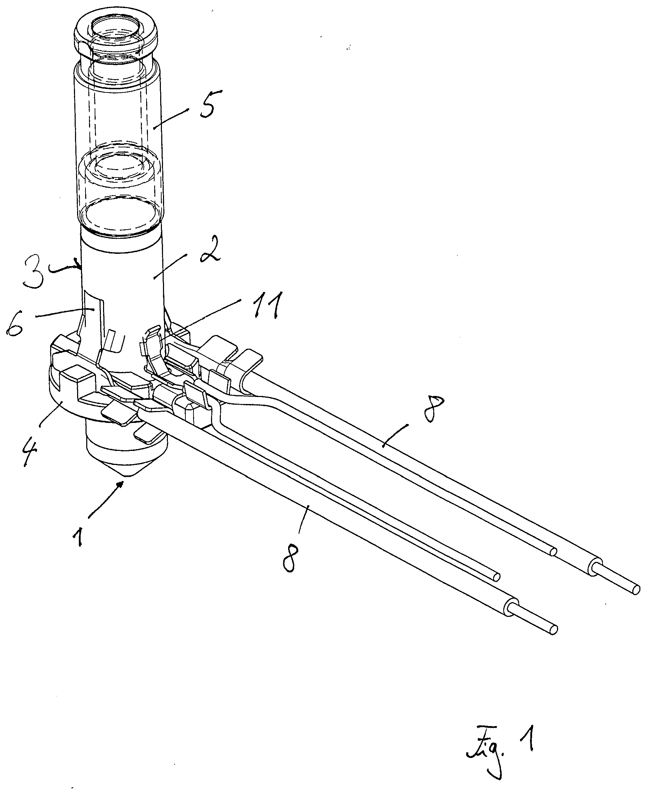

- Fig. 1: ein Ausführungsbeispiel eines erfindungsgemäßen Druckkopfs für einen 3D-Drucker,
- Fig. 2: eine weitere Ansicht des Druckkopfs mit Blick von unten auf dessen Austrittsöffnung,
- Fig. 3: ein Ausführungsbeispiel des Rohrs mit der Düse des Druckkopfs;
- Fig. 4: eine schematische Schnittansicht von Rohr und Hitzeschutzrohr des Druckkopfs;
- Fig. 5: eine Ansicht von Halterung und Federkontakten des Druckkopfs von unten; und
- Fig. 6: eine Ansicht von Halterung und Federkontakten des Druckkopfs von oben.

Der in den Figuren dargestellte Druckkopf für einen 3D-Drucker hat eine Düse 1 zum Abgeben von aufgeschmolzenem Kunststoffmaterial, ein an die Düse 1 angeschlossenes Rohr 2, das eine Heizwiderstandsschicht 3 trägt, eine ringförmige Halterung 4, in der das Rohr 2 sitzt, und ein Hitzeschutzrohr 5, das an dem von der Düse 1 abgewandten Ende des die Heizwiderstandsschicht 3 tragenden Rohrs 2 angebracht ist.

Die Düse 1 und das daran angeschlossene Rohr 2, das die Heizwiderstandsschicht 3 trägt, können einstückig hergestellt sein, beispielsweise aus einer Aluminiumoxid-Keramik. Aluminiumoxid-Keramiken haben eine hohe Abriebfestigkeit und eine gute Wärmeleitfähigkeit, so dass von der Heizwiderstandsschicht 3 erzeugte Wärme schnell an aufzuschmelzendes Material in dem Rohr 2 abgegeben werden kann. Um Wärmeverlust durch Abgabe an andere Teile eines 3D-Druckers zu reduzieren, trägt das mit der Widerstandsschicht 3 versehene Rohr 2 an seinem von der Düse 1 angewandten Ende ein Hitzeschutzrohr 5, das aus einem Material hergestellt ist, das eine geringere Wärmeleitfähigkeit als das Rohr 2 aufweist, insbesondere eine geringere Wärmeleitfähigkeit als Aluminiumoxid-Keramik aufweist. Geeignete Materialien für das Hitzeschutzrohr 5 sind beispielsweise Titan und insbesondere Zirkonoxid-Keramiken. Das Hitzeschutzrohr 5 kann stoffschlüssig mit dem die Heizwiderstandsschicht 3 tragenden Rohr 2 verbunden sein, beispielsweise durch Hartlöten oder einen Klebstoff.

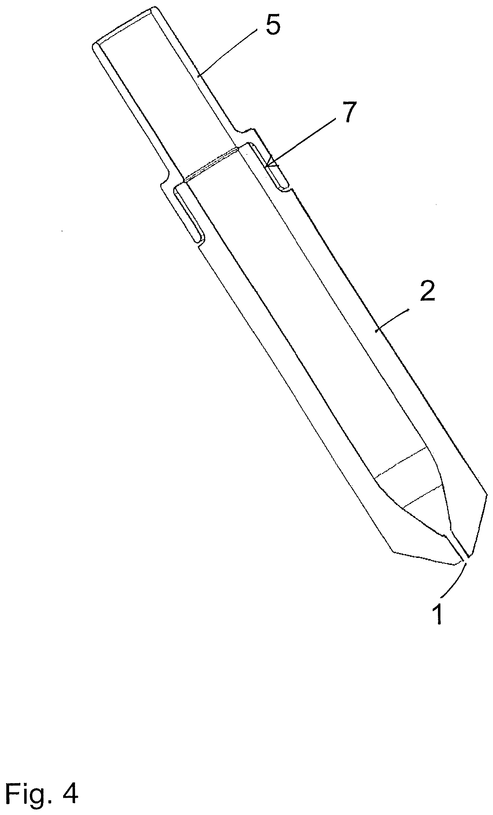

Das Hitzeschutzrohr 5 und das die Heizwiderstandsschicht 3 tragenden Rohr 2 können ineinandergesteckt sein, wie dies in Fig. 4 schematisch dargestellt ist. Auf diese Weise lässt sich die Kontaktfläche zwischen dem Hitzeschutzrohr 5 und dem die Heizwiderstandsschicht 3 tragenden Rohr 2 vergrößern, was eine stoffschlüssige Verbindung erleichtert. Sowohl das Hitzeschutzrohr 5 als auch das die Heizwiderstandsschicht 3 tragenden Rohr 2 können dazu mit einem konischen Endabschnitt versehen sein, was das Ineinanderstecken erleichtert. In Fig. 4 ist das die Heizwiderstandsschicht 3 tragenden Rohr 2 in das Hitzeschutzrohr 5 gesteckt. Alternativ kann aber auch das Hitzeschutzrohr 5 in das die Heizwiderstandsschicht 3 tragenden Rohr 2 gesteckt werden. Ein verbleibender Spalt 7 zwischen Rohr 2 und Hitzeschutzrohr 5 kann mit Klebstoff oder Lot verfüllt sein.

Das die Heizwiderstandsschicht 3 tragende Rohr 2 sitzt in der ringförmigen Halterung 4, an der Federkontakte 6 montiert sind, die an sich gegenüberliegenden Stellen unter Vorspannung an einer Mantelfläche des Rohrs 2 anliegen und so die Heizwiderstandsschicht 3 elektrisch kontaktieren. Das an die Düse 1 angeschlossene Rohr 2 kann deshalb auf seinem vollen Umfang von der Heizwiderstandsschicht 3 bedeckt sein. Die Federkontakte 6 sind bei dem gezeigten Ausführungsbeispiel Stanzbiegeteile aus Blech, die mit elektrischen Anschlussleitungen 8 verkrimpt oder anderweitig verbunden sein können.

Die Heizwiderstandsschicht 3 kann beispielsweise durch Abscheidung aus der Gasphase oder auch durch Aufsprühen oder Aufdrucken aufgebracht werden. Die Heizwiderstandsschicht 3 kann dabei direkt auf das Rohr 2 aufgetragen werden oder auf eine Zwischenschicht, etwa um die Haftung zu verbessern.

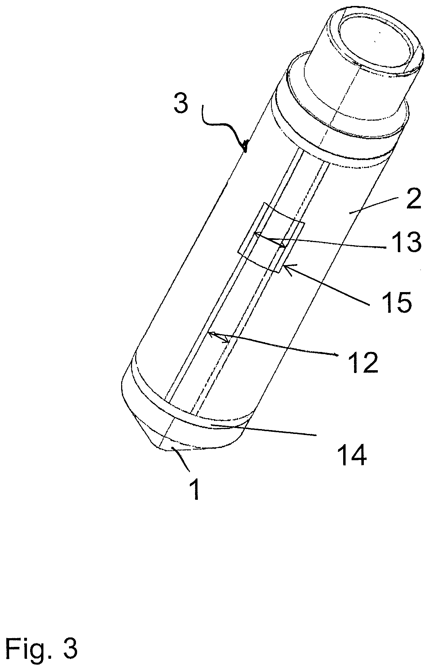

Die Heizwiderstandsschicht 3 kann das Rohr 2 auf seinem vollen Umfang bedecken, oder -wie in Fig. 3 schematisch dargestellt- einen schmalen Längsstreifen 12 unbedeckt lassen. Dieser Längsstreifen 12 kann von einer leitfähigen Schicht 13 überbrückt sein, so dass dennoch der volle Umfang für einen Heizstrom genutzt werden kann.

Die ringförmige Halterung 4 kann stoffschlüssig mit dem Rohr 2 verbunden sein, beispielsweise durch Hartlöten oder Kleben. Besonders gut geeignet ist ein Verkleben mit einem Klebstoff auf Basis von Aluminiumoxid und Kaliumsilikat. Ein solcher Klebstoff kann als eine wässerige Mischung aufgebracht und dann in einem oder mehreren Schritten durch Trocknung und Temperatureinwirkung ausgehärtet werden. Die Halterung 4 umgibt einen Abschnitt des Rohres 2, der von der Heizwiderstandsschicht 3 bedeckt ist. Die Heizwiderstandsschicht 3 kann dabei durch eine elektrisch isolierende Deckschicht 14 vor Beschädigung geschützt sein. Bevorzugt ist die Halterung 4 mit der Deckschicht 14 verklebt oder verlötet, äußerst bevorzugt mit der Deckschicht 14 auf axialer Höhe der Heizwiderstandsschicht 3 verklebt oder verlötet. Dies ermöglicht auf begrenztem Bauraum eine große Heizwiderstandsfläche. Die Deckschicht 14 hat Aussparungen 15, in denen die Federkontakte 6 an den leitfähigen Schichten 13 anliegen, und kann beispielsweise aus einem amorphen oder glasartigen Material bestehen.

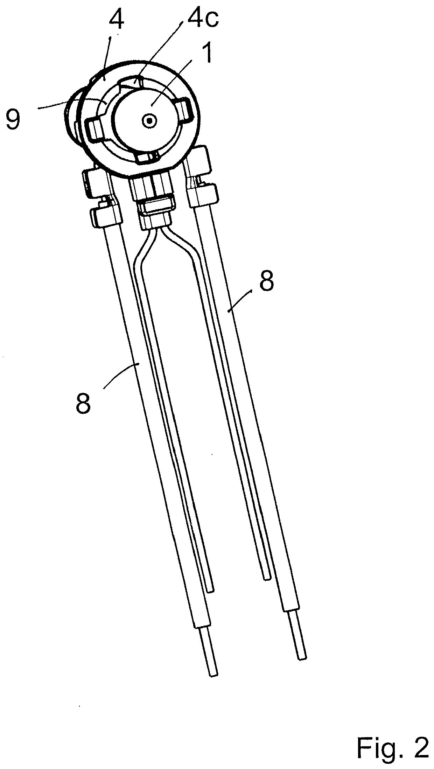

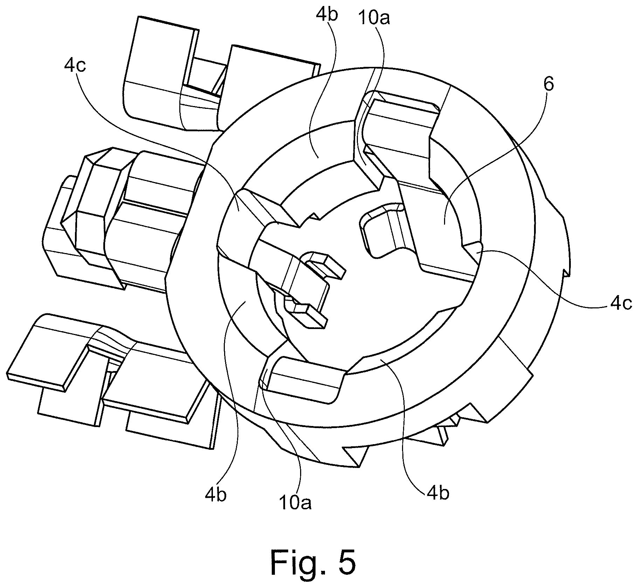

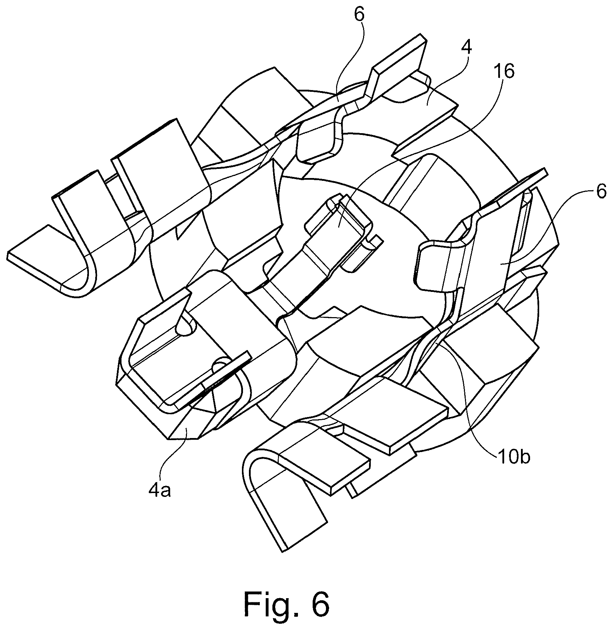

Figur 2 zeigt eine Detailansicht des Druckkopfs mit Blick von unten auf die Austrittsöffnung der Düse 1. Figur 5 zeigt eine entsprechende Ansicht der Halterung 4 mit den Federkontakten 6 von unten, d.h. von der Düse 1 aus gesehen, und Figur 6 die Halterung 4 mit den Federkontakten 6 von oben. Wie insbesondere in Figur 5 zu sehen ist, hat die Halterung 4 an ihrer Unterseite eine ringförmige Rampe 4b. Die Rampe 4b bildet zusammen mit dem in die Halterung 4 eingesetzten Rohr 2 eine Nut 9, die vorteilhaft mit Hartlot oder Klebstoff gefüllt werden kann, um einen mechanisch zuverlässigen Kontakt zwischen Rohr 2 und Halterung 4 zu schaffen. Alternativ oder zusätzlich können Aussparungen 4c zur Aufnahme von Klebstoff dienen Die Halterung 4 kann weiterhin Aussparungen 10a und/oder Schlitze 10b aufweisen, die sich in axialer Richtung des Rohrs 2 erstrecken. In diese Aussparungen 10a und/oder Schlitze 10b können Stanzbiegeteile, welche die Federkontakte 6 bilden, eingreifen und so den mechanischen Kontakt verbessern.

Zur Temperaturüberwachung kann an dem Rohr 2 ein Temperatursensor 11 anliegen, beispielsweise ein Messwiderstand. Der Sensor ist ebenfalls durch die ringförmige Halterung 4 gehalten. Dazu ist ein Federblech 16 an der Halterung befestigt, das den Sensor 11 federnd gegen das Rohr 2 drückt. In einer vorteilhaften Ausgestaltung weist die Halterung 4 dazu einen Ansatz 4a auf, den Laschen des Federbleches 16 elastisch umgreifen. Zusätzlich kann der Sensor noch mit dem Rohr verklebt sein.

Die Größe des beschriebenen Druckkopfes kann entsprechend den Anforderungen eines gegebenen 3D-Drucker praktisch beliebig gewählt werden. In der Regel hat das Rohr 2 zusammen mit der Düse eine Länge von 1 cm bis 3 cm, insbesondere 1,5 cm bis 2,5 cm, und einen Durchmesser von 0,4 cm bis 0,8 cm.

### Bezugszeichenliste

- 1: Düse
- 2: Rohr
- 3: Heizwiderstandsschicht
- 4: Halterung
- 4a: Ansatz
- 4b: Rampe
- 4c: Aussparung
- 5: Hitzeschutzrohr
- 6: Federkontakte
- 8: Anschlussleitung
- 9: Nut
- 10a: Aussparung
- 10b: Schlitz
- 11: Temperatursensor
- 12: Längsstreifen
- 13: leitfähige Schicht
- 14: Deckschicht
- 15: Aussparung
- 16: Federblech

## Patentansprüche

1. Druckkopf für einen 3D-Drucker, mit
einer Düse (1) zum Abgeben von aufgeschmolzenem Material,
einem an die Düse (1) angeschlossenen Rohr (2), das eine Heizwiderstandsschicht (3) trägt, und
einer Halterung (4), in der das Rohr (2) sitzt und an der Federkontakte (6) montiert sind, welche die Heizwiderstandsschicht (3) kontaktieren,
**dadurch gekennzeichnet, dass**
die Halterung (4) ringförmig ist, und
die Federkontakte (6) Stanzbiegeteile aus Blech sind, die an sich gegenüberliegenden Stellen an dem Rohr (2) anliegen.

2. Druckkopf nach Anspruch 1, **dadurch gekennzeichnet, dass** die Heizwiderstandsschicht (3) durch Aufsprühen, Aufdrucken oder Abscheidung aus der Gasphase aufgebracht wurde.

3. Druckkopf nach einem der vorstehenden Ansprüche, **dadurch gekennzeichnet, dass** die Düse (1) und das Rohr (2) aus einer Aluminiumoxid-Keramik hergestellt sind.

4. Druckkopf nach einem der vorstehenden Ansprüche, **dadurch gekennzeichnet, dass** die Halterung (4) stoffschlüssig mit dem Rohr (2) verbunden ist.

5. Druckkopf nach Anspruch 4, **dadurch gekennzeichnet, dass** das Rohr (2) mit der Halterung (4) verklebt ist, vorzugsweise mittels eines Klebstoffs auf Basis von Aluminiumoxid und Kaliumsilikat.

6. Druckkopf nach Anspruch 5, **dadurch gekennzeichnet, dass** die Halterung (4) eine Vertiefung, beispielsweise eine Aussparung (4c), Rampe (4b), Rille oder Ringschulter aufweist, die zusammen mit dem Rohr (2) eine Aufnahme für Klebstoff bildet.

7. Druckkopf nach Anspruch 6, **dadurch gekennzeichnet, dass** die Vertiefung mit dem Rohr (2) zusammen eine ringförmige Nut (9) ausbildet, bevorzugt an einer der Düse (1) zugewandten Unterseite der Halterung (4).

8. Druckkopf nach einem der vorstehenden Ansprüche, **dadurch gekennzeichnet, dass** die Halterung (4) aus Steatit herstellt ist.

9. Druckkopf nach einem der vorstehenden Ansprüche, **dadurch gekennzeichnet, dass** das Rohr (2) an seinem von der Düse (1) abgewandten Ende ein Hitzeschutzrohr (5) trägt.

10. Druckkopf nach Anspruch 9, **dadurch gekennzeichnet, dass** das Hitzeschutzrohr (5) aus einer Zirkonoxidkeramik ist.

11. Druckkopf nach einem der vorstehenden Ansprüche, **dadurch gekennzeichnet, dass** die Halterung (4) einen Abschnitt des Rohrs (2) umgibt, der von der Heizwiderstandsschicht (3) bedeckt ist.

12. Druckkopf nach einem der vorstehenden Ansprüche, **dadurch gekennzeichnet, dass** die Heizwiderstandsschicht (3) von einer Deckschicht (14), vorzugsweise einer amorphen oder glasartigen Deckschicht, bedeckt ist, die mind. eine Aussparung (15) aufweist, in der ein Federkontakt (6) an der leitfähigen Schicht (13) anliegt.

## Claims

1. Print head for a 3D printer, comprising
a nozzle (1) for dispensing molten material,
a pipe (2) connected to the nozzle (1) and carrying a heating resistor layer (3), a bracket (4) in which the pipe (2) is seated and on which spring contacts (6) are mounted that contact the heating resistor layer (3),
**characterised in that**
the bracket (4) is annular and
the spring contacts (6) are stamped bent parts of sheet metal which touch the pipe (2) at opposite points and contact the heating resistor layer (3).

2. Print head according to claim 1, **characterised in that** the heating resistor layer (3) was applied by spraying, printing or deposition from the gas phase.

3. Print head according to any one of the preceding claims, **characterised in that** the nozzle (1) and the pipe (2) are made of an aluminium oxide ceramic.

4. Print head according to any one of the preceding claims, **characterised in that** the bracket (4) is connected to the pipe (2) by a material bond.

5. Print head according to claim 4, **characterised in that** the pipe (2) is bonded to the bracket (4), preferably by means of an adhesive based on aluminium oxide and potassium silicate.

6. Print head according to claim 5, **characterised in that** the bracket (4) has a depression, for example a recess (4c), ramp (4b), groove or annular shoulder, which together with the pipe (2) forms a receptacle for adhesive.

7. Print head according to claim 6, **characterised in that** the recess forms an annular groove (9) together with the pipe (2), preferably on an underside of the bracket (4) facing the nozzle (1).

8. Print head according to any one of the preceding claims, **characterised in that** the bracket (4) is made of steatite.

9. Print head according to any one of the preceding claims, **characterised in that** the pipe (2) carries a heat protection pipe (5) at its end facing away from the nozzle (1).

10. Print head according to claim 9, **characterised in that** the heat protection pipe (5) is made of a zirconium oxide ceramic.

11. Print head according to any one of the preceding claims, **characterised in that** the bracket (4) surrounds a portion of the pipe (2) covered by the heating resistor layer (3).

12. Print head according to any one of the preceding claims, **characterised in that** the heating resistor layer (3) is covered by a cover layer (14), preferably an amorphous or glass-like cover layer, which has at least one recess (15) in which a spring contact (6) rests against the conductive layer (13).

## Revendications

1. Tête d'impression pour une imprimante 3D, comprenant:
une buse (1) destinée à délivrer du matériau fondu,
un tube (2) raccordé à la buse (1), qui porte une couche de résistance chauffante (3), et
un support (4) dans lequel est logé le tube (2) et sur lequel sont montés des contacts à ressort (6) qui sont en contact avec la couche de résistance chauffante (3),
**caractérisée en ce que**
le support (4) est de forme annulaire, et
les contacts à ressort (6) sont des pièces estampées et arquées en tôle qui s'appuient contre le tube (2) en des points opposés.

2. Tête d'impression selon la revendication 1, **caractérisée en ce que** la couche de résistance chauffante (3) a été appliquée par pulvérisation, impression ou dépôt en phase gazeuse.

3. Tête d'impression selon l'une des revendications précédentes, **caractérisée en ce que** la buse (1) et le tube (2) sont fabriqués en céramique d'oxyde d'aluminium.

4. Tête d'impression selon l'une des revendications précédentes, **caractérisée en ce que** le support (4) est relié par Liaison de matière au tube (2).

5. Tête d'impression selon la revendication 4, **caractérisée en ce que** le tube (2) est collé au support (4), de préférence à l'aide d'une colle à base d'oxyde d'aluminium et de silicate de potassium.

6. Tête d'impression selon la revendication 5, **caractérisée en ce que** le support (4) présente un renfoncement, par exemple un évidement (4c), une rampe (4b), une rainure ou un épaulement annulaire, qui forme, conjointement avec le tube (2), un logement pour une colle.

7. Tête d'impression selon la revendication 6, **caractérisée en ce que** le renfoncement forme, conjointement avec le tube (2), une rainure annulaire (9), de préférence sur une face inférieure du support (4) tournée vers la buse (1).

8. Tête d'impression selon l'une des revendications précédentes, **caractérisée en ce que** le support (4) est fabriqué en stéatite.

9. Tête d'impression selon l'une des revendications précédentes, **caractérisée en ce que** le tube (2) porte, à son extrémité opposée à la buse (1), un tube de protection thermique (5).

10. Tête d'impression selon la revendication 9, **caractérisée en ce que** le tube de protection thermique (5) est en céramique d'oxyde de zirconium.

11. Tête d'impression selon l'une des revendications précédentes, **caractérisée en ce que** le support (4) entoure une partie du tube (2) qui est recouverte par la couche de résistance chauffante (3).

12. Tête d'impression selon l'une des revendications précédentes, **caractérisée en ce que** la couche de résistance chauffante (3) est recouverte d'une couche de recouvrement (14), de préférence une couche de recouvrement amorphe ou vitreuse, qui présente au moins un évidement (15) dans lequel un contact à ressort (6) vient en appui contre la couche conductrice (13).
